## Europäisches Patentamt
## European Patent Office
## Office européen des brevets

(19)

(11) Numéro de publication: **0 002 664**
**B1**

(12) **FASCICULE DE BREVET EUROPEEN**

(45) Date de publication du fascicule de brevet: **16.09.81**

(51) Int. Cl.³: **B 22 F 9/00, B 03 B 9/00, C 22 B 1/00, B 65 G 27/00**

(21) Numéro de dépôt: **78101373.5**

(22) Date de dépôt: **15.11.78**

(54) Procédé de traitement de déchets métalliques et dispositif de mise en oeuvre.

(30) Priorité: **22.12.77 FR 7738880**

(43) Date de publication de la demande:
**11.07.79 Bulletin 79/14**

(45) Mention de la délivrance du brevet:
**16.09.81 Bulletin 81/37**

(84) Etats Contractants Désignés:
**DE GB SE**

(56) Documents cités:
**US - A - 2 354 727**
**US - A - 2 394 578**
**US - A - 3 368 890**
**US - A - 4 018 633**

(73) Titulaire: **REGIE NATIONALE DES USINES RENAULT**
**Boite postale 103 8-10 avenue Emile Zola**
**F-92109 Boulogne-Billancourt (FR)**

(72) Inventeur: **Malard, Jacques**
**68, Avenue du Maréchal Foch**
**F-92260 Fontenay-aux-Roses (FR)**

(74) Mandataire: **Casalonga, Axel et al,**
**Bureau D.A.Casalonga Lilienstrasse 77**
**D-8000 München 80 (DE)**

Courier Press, Leamington Spa, England.

Procédé de traitement de déchets métalliques et dispositif de mise en oeuvre.

La présente invention est relative à un procédé de traitement de déchets métalliques et, en particulier, de copeaux et aux dispositifs de mise en oeuvre dudit procédé.

Le procédé selon l'invention a plus particulièrement pour objet de préparer un matériau métallique pulvérulent, apte à la fabrication de pièces frittées.

Les déchets métalliques et, en particulier, les copeaux utilisés dans la présente invention, sont des déchets résultant des différents usinages nécessaires à l'adaptation des pièces métalliques lors de la fabrication de dispositifs mécaniques divers.

Ces déchets métalliques sont une source de nuisance non négligeable résultant, notamment, des problèmes de stockage, de manutention et de l'oxydation rapide de ces éléments.

Il est connu par le brevet U.S.A. 4.018.633 de traiter des déchets métalliques et en particulier des copeaux en mettant en oeuvre un broyage de copeaux traité à l'azote liquide dans lequel on effectue avant le broyage éventuellement un dégraissage, le broyage étant suivi d'un frittage sous atmosphère inerte ou en présence d'un gaz réducteur.

Le brevet U.S.A. 2.354.727 prévoit le chauffage de déchets métalliques entre 500 et 900°C, pour précipiter les carbures dans les limites desgrains, le produit en résultant est trempé dans un milieu corrosif pour éliminer les abrasifs qui adhèrent aux résidus, les particules nettoyées sont broyées, soumises à une concentration par séparation magnétique, puis sont lavées à l'acide nitrique chaud et sont utilisées dans des procédés de la métallurgie des poudres après, de préférence, recuit à 900—1200°C.

Ces procédés ne permettent cependant pas de résoudre tous les problèmes posés par les déchets métalliques, de sorte que pour la préparation des poudres métalliques destinées à la fabrication de pièces frittées, l'on utilisait, essentiellement, des poudres métalliques provenant d'un traitement approprié d'une matière métallique en fusion.

Les principaux problèmes que se posent pour l'utilisation des déchets métalliques et, en particulier, des copeaux d'usinage dans une telle application, résultent de leur état physique qui pose des problèmes de manutention, les copeaux ayant tendance à user les pièces des dispositifs de manutention. Un autre problème provient de la facilité d'écrouissage de ces copeaux ce qui, pour une application comme poudres destinées à la fabrication de pièces frittées, présente un inconvénient sérieux car l'écrouissage peut nuire au frittage.

Les copeaux ont, par ailleurs, tendance, notamment lorsqu'ils sont chauffés à former des masses agglomérées qui ne peuvent être utilisées dans la fabrication de poudres destinées à la préparation des pièces frittées.

La demanderesse a découvert maintenant que les déchets métalliques et, en particulier, les copeaux d'usinage pouvaient êtres utilisés pour la fabrication d'un matériau métallique pulvérulent destiné, en particulier, à la fabrication de pièces frittées, en surmontant les différents inconvénients précités résultant de leur nature et de leur constitution.

L'invention a donc pour objet un procédé de traitement de déchets métalliques et, en particulier, des copeaux métalliques destinés à être utilisés pour la fabrication de pièces frittées.

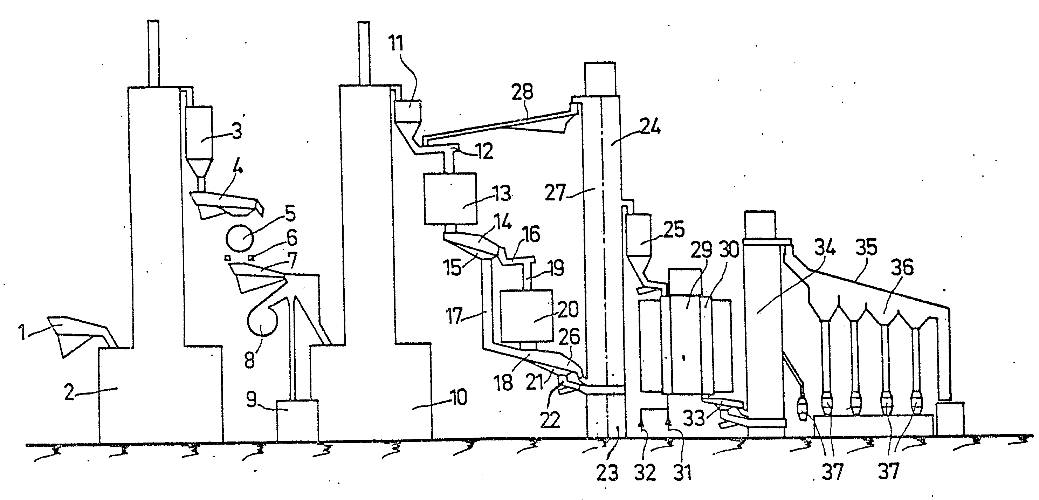

Un autre objet de l'invention est constitué par un dispositif de mise en oeuvre dudit procédé. D'autres objets résulteront de la description et du dessin qui suivent.

Le procédé de traitement de déchets métalliques et en particulier de copeaux, consiste à mettre en oeuvre un nettoyage chimique par dégraissage, un broyage sous atmosphère inerte de copeaux rendus fragiles si nécessaire par utilisation de température très basse et un traitement thermique, et est essentiellement caractérisé par le fait que l'on effectue un criblage après le nettoyage chimique, que le passage dans les différents traitements s'effectue au moyen de dispositifs vibrants dans une installation étanche aux éléments atmosphèriques et que les particules résultant du broyage sont soumises, avant frittage, à un traitement thermique à une température de 500 à 800°C, sous atmosphère réductrice.

Dans le procédé selon l'invention, le nettoyage chimique et physique s'effectue de préférence en plusieurs étapes consistant à procéder à un dégraissage suivi d'un criblage ainsi qu'éventuellement d'un déferrage magnétique et d'un traitement au démagnétiseur en vue de séparer les copeaux des éléments non ferreux ainsi que pour supprimer la rémanence des copeaux, ce traitement pouvant être suivi d'un second traitement de dégraissage, et l'avancement des matériaux à traiter au cours des différentes étapes de traitement de nettoyage s'effectuant au moyen de dispositifs vibrants.

Les dispositifs vibrants utilisés au cours de cette étape sont constitués par des distributeurs vibrants amenant les copeaux dans le bain de dégraissage, dans les cribles, par des élévateurs vibrants permettant l'extraction et le séchage progressif des copeaux jusqu'à l'étape de criblage qui est effectuée dans un crible vibrant. Les dispositifs vibrants et, notamment, les élévateurs vibrants sont adaptés de façon à éviter l'agglomération des copeaux et à favoriser un brassage continuel des copeaux en vue d'obtenir un bon contact de ceux-ci avec l'agent dégraissant.

Dans une mise en oeuvre particulièrement avantageuse, le dégraissage s'effectue par action d'un agent décapant combiné à un traitement par ultrasons émis dans le bain de dégraissage.

On utilise au cours de l'étape de dégraissage, des agents décapants habituellement utilisés dans ce domaine tels que le trichloréthylène. Ce traitement s'effectuant à une température supérieure à la température ambiante et, de préférence, à une température égale à environ 60°C. Les copeaux soumis à l'action de l'agent de dégraissage, sont refroidis, de préférence à une température inférieure à la température du bain d'immersion et supérieure à la température ambiante. Cette température peut être égale à environ 40°C. Une fois refroidis, ils sont séchés dans l'élévateur vibrant au moyen d'un courant d'air envoyé sous le dispositif d'élévation vibrant qui est à une température comprise, de préférence, entre 80 et 150°C et, plus particulièrement, égale à environ 120°C. Les copeaux réchauffés à l'air sont refroidis au sommet de la tour de traitement à une température suffisante pour piéger les différentes vapeurs qui ont été émises au cours du chauffage, à une température qui est, de préférence, égale à environ 40°C. Cette étape de nettoyage physique et chimique peut également être suivie d'une étape de séparation qui peut être mise en oeuvre par soufflage d'air à haute pression en vue d'éliminer les parties massives telles que les écrous et les boulons, des copeaux.

La seconde étape de dégraissage s'effectue dans des conditions similaires à celles mises en oeuvre dans la première étape de dégraissage.

L'atmosphère inerte que règne au cours du broyage peut être constituée par de l'azote ou un gaz rare. Selon une mise en oeuvre particulièrement avantageuse de l'invention, cette atmosphère inerte est fournie par un bain d'azote liquide ayant pour fonction de refroidir préalablement les copeaux afin de les fragiliser avant leur passage dans le broyeur et de fournir ensuite par dégagement l'atmosphère inerte compte tenu des conditions étanches de circulation des copeaux à partir de l'étape de dégraissage jusqu'à la classification.

Les broyeurs à utiliser sont, de préférence, des broyeurs du type à marteau. Les dispositifs vibrants utilisés au cours de cette étape sont constitués par des distributeurs vibrants amenant les copeaux dégraissés dans le broyeur et reprenant ceux-ci jusqu'à l'étape de criblage qui s'effectue dans un cribleur vibrant. Les copeaux broyés sont repris dans une tour vibrante comportant les moyens permettant d'amener, d'une part, les copeaux insuffisamment broyés au moyen d'un couloir vibrant aux dispositifs de broyage précités et, d'autre part, les copeaux suffisamment broyés dans l'étape de traitement thermique sous atmosphère réductrice.

Le traitement thermique qui est destiné à éliminer toutes les traces d'écrouissage qui pourraient avoir un effet néfaste lors de l'utilisation des poudres métalliques pour la fabrication de pièces frittées, s'effectue de préférence dans un dispositif vibrant hélicoïdal en un matériau réfractaire. Ce dispositif vibrant est équipé, de préférence, de deux vibrateurs permettant de faire circuler les copeaux. Ce dispositif est entouré d'un four assurant, de façon avantageuse, trois zones de chauffage et trois zones de régulation à une température comprise entre environ 500 et environ 800°C et qui est, de préférence, égale à environ 700°C. Le temps de passage des copeaux est compris entre 5 et 20 mn et, de préférence, est égal à environ 10 mn.

L'atmosphère réductrice est créée dans une réalisation préférentielle de l'invention par un mélange d'un gaz inerte tel que l'azote avec un gaz réducteur tel que l'hydrogène. Le débit de gaz inerte est compris, en particulier, entre 5 et 10 m3/h environ alors que le débit de gaz réducteur est compris, en particulier, entre 0,75 et 1,5 m3/h.

Ces gaz circulent a contre-courant des copeaux dans le dispositif vibrant.

Les copeaux une fois traités et recuits sont évacués au moyen d'un tamis vibrant vers un ensemble de classification sous atmosphère inerte alors que les copeaux agglomérés sont rejetés.

Comme indiqué précédemment, l'ensemble de l'installation est étanche aux éléments atmosphériques ce qui permet d'éviter toute oxydation par l'air ou les éléments atmosphériques, l'ensemble fonctionnant également de telle façon à éviter tout contact des mécanismes de manutention avec les copeaux ce qui peut être réalisé par l'utilisation des distributeurs vibrants, des couloirs vibrants, des trémies vibrantes, des élévateurs vibrants, etc....

L'installation de traitement des déchets métalliques et, en particulier, des copeaux, selon l'invention, est caractérisée par le fait qu'elle comprend au moins un dispositif de nettoyage physique et chimique, un dispositif de broyage sous atmosphère inerte, un dispositif de traitement thermique sous atmosphère réductrice, ces différents dispositifs étant reliés par et comportant des éléments de vibration permettant de faire circuler lesdits déchets métalliques de la phase de nettoyage à la phase de traitement thermique.

Le dispositif de nettoyage chimique et physique peut être constitué comme indiqué ci-dessus par une tour de lavage comportant un élévateur vibrant permettant d'extraire les copeaux dégraissés de l'agent de dégraissage associée également à des couloirs vibrants permettant d'amener les copeaux dans le bain de dégraissage et d'évacuer les copeaux vers le dispositif de séparation mécanique constitué par une trémie vibrante, un dispositif de déferrage magnétique, un démagnétiseur et un séparateur par soufflage d'air. Ce dispositif peut comporter, une seconde tour de lavage du type précité.

Le dispositif de broyage comporte au moins un broyeur tel que du type à marteau relié à un couloir vibrant permettant d'alimenter ce dernier et un couloir vibrant ayant pour fonction de reprendre les produits broyés pour les soumettre au traitement thermique sous atmosphère réductrice ou à un nouveau broyage.

Le traitement thermique s'effectue au moyen d'un dispositif hélicoïdal comportant deux vibrateurs entourés d'un four assurant trois zones de chauffage et trois zones de régulation du type précité, ledit dispositif étant équipé d'un couloir de vibration permettant d'évacuer les copeaux traités vers un ensemble de classification.

On décrira par la suite une variante particulière de l'invention qui permettra de mieux comprendre celle-ci à la lumière de la figure unique représentant une installation de traitement de déchets métalliques en vue de préparer des poudres destinées à être utilisées pour la fabrication de pièces frittées.

Les copeaux sont chargés dans un distributeur vibrant 1 alimentant une tour de lavage 2. Les copeaux constituant l'alimentation peuvent être transportés si on le souhaite directement d'un retourneur de benne contenant lesdits copeaux jusqu'au distributeur vibrant 1 par des dispositifs connus en eux-mêmes. On peut ainsi vider le contenu d'un retourneur de benne de copeaux dans une trémie de réception associée à un transporteur élévateur qui amène les copeaux dans une centrifugeuse à marche discontinue qui alimente un transporteur de reprise placé sous la centrifugeuse et amenant les copeaux dans ledit distributeur vibrant 1.

Cette façon de procéder, permet d'éviter, en particulier, les manutentions inutiles qui présentent, comme cela était signalé plus haut, de nombreux inconvénients.

Les copeaux introduits dans la tour de lavage 2 passent dans un bain d'un agent décapant tel que le trichloréthylène chauffé à une température d'environ 60°C avec une émission d'ultrasons. Les copeaux sont extraits du bain au moyen d'un élévateur vibrant et sont refroidis à leur sortie par des serpentins à circulation d'eau froide amenant la température des copeaux à environ 40°C. Les copeaux ainsi refroidis sont ensuite séchés dans la partie supérieure de la tour au moyen d'air chaud provenant d'une gaine d'aire placée sous les spires de l'élévateur vibrant. Le séchage s'effectue par injection d'air à une température d'environ 120°C.

Il est à noter que l'utilisation de l'élévateur vibrant, au cours de ce procédé de dégraissage, permet d'éviter l'agglomération des copeaux et provoque un brassage continuel qui favorise le contact avec le produit dégraissant, Les copeaux ainsi dégraissés sont introduits à partir du haut de la tour de lavage 2 dans une trémie à distribution 3 associée à un crible vibrant 4 permettant d'éliminer les parties, métalliques ou autres, trop grosses pour être admises dans le broyeur. Après criblage dans le crible vibrant 4 on peut procéder, si on le souhaite à un déferrage magnétique dans un dispositif 5, en vue de séparer les copeaux des éléments non ferreux et à un démagnétisage dans un démagnétiseur 6 pour supprimer la rémanence des copeaux triés.

Après ces différentes opérations, les copeaux sont amenés à passer par un séparateur 7, par soufflage d'air 8 à haute pression en vue d'éliminer les parties massives telles que les écrous, les boulons etc ... des copeaux plus légers. Les parties massives sont évacuées vers une caisse 9 alors que les copeaux triés sont introduits dans une seconde tour de lavage 10 dans laquelle l'opération de dégraissage s'effectue de façon similaire à la manière décrite en relation avec la tour 2. Les copeaux dégraissés sont transportés à partir du haut de la tour 10 dans une trémie de distribution de copeaux 11 associée à un distributeur vibrant pouvant recevoir de l'azote liquide 12 destiné à fragiliser les copeaux avant broyage. L'azote liquide présent à cette phase de l'opération, constitué également une source d'azote fournissant l'atmosphère inerte requise pour le traitement selon l'invention. Naturellement, on peut également éviter de procéder à la fragilisation en plaçant simplement à ce niveau une source d'azote gazeux out toute autre source de gaz inerte, fournissant l'atmosphère inerte requise. Les copeaux refroidis sont introduits dans un broyeur tel qu'un broyeur à marteau 13 puis repris dans un distributeur de reprise et de criblage 14 qui assure une séparation des copeaux suffisamment broyés 15, des copeaux insuffisamment broyés 16. Les copeaux suffisamment broyés sont transférés au moyen de la colonne 17 vers un couloir vibrant 18 opérant en tamisage et distribuant les copeaux en deux catégories. Les copeaux insuffisamment broyés au niveau du distributeur de reprise 14 sont introduits dans un distributeur vibrant 19 pouvant recevoir de l'azote liquide comme ci-dessus en vue d'abaisser la température des copeaux pour les fragiliser et ils sont soumis à un second broyage dans un broyeur à marteau ou à barrette 20, les copeaux ainsi broyés sont évacués dans le couloir vibrant 18. Le couloir vibrant 18 équipé d'un dispositif de tamisage 21 sépare les copeaux en deux parties dont l'une 22 est prête à être utilisée pour l'opération de traitement thermique et est transportée au moyen d'une spire 23 dans la tour vibrante 24 vers une trémie de stockage 25 alors que les copeaux insuffisamment broyés 26 sont transportés, au moyen d'une spire 27 dans la tour vibrante jusqu'à un couloir vibrant 28 au sommet de ladite tour vibrante quii transfère lesdits copeaux dans le distributeur vibrant 12 pouvant recevoir l'azote liquide. Les copeaux peuvent à nouveau être soumis aux différentes étapes du broyage précité. Les copeaux suffisamment broyés et stockés dans la trémie de stockage 25 sont introduits dans un alimenteur vibrant 29 équipé d'un descendeur vibrant à hélice en acier inoxydable réfractaire équipé de deux vibrateurs. Ce descendeur comporte, par ailleurs, une cloche d'étanchéité en acier inoxydable réfractaire avec un joint de dilatation et, à la partie supérieure, un écran thermique protégeant l'ensemble du vibrateur. Un four à résistance électrique 30 assure trois zones de chauffage et trois zones de régulation, ce four a, par exemple, une puissance de 30 kW et la température est d'environ 700°C. Le temps de passage des copeaux dans cette zone de traitement thermique est d'environ 10 mn. On introduit dans ce descendeur vibrant de l'hydrogène 31 et de l'azote 32 dont le débit est réglé au moyen de vannes placées sur les lignes 31 et 32. Le dispositif peut être équipé d'une torchère non représentée sur la figure assurant la combustion du surplus d'hydrogène. Les copeaux ainsi traités sous atmosphère réductrice, sont repris par un tamis vibrant en acier inoxydable 33 qui sépare les copeaux transformés recruits et les transfère jusqu'à une tour vibrante 34 qui évacue les copeaux jusqu'à l'ensemble de classification 35 alors que les copeaux agglomérés sont éliminés au bas de la tour 34. Les copeaux transformés et recuits, transportés par l'élévateur vibrant, sont amenés à l'ensemble de classification 35 comportant un tamis vibrant 36 qui classe par exemple les copeaux en quatre catégories de grosseur. Les copeaux de différentes grosseurs sont recueillis dans des containers 37 comportant, de préférence, des doubles vannes permettant de récupérer sous azote les copeaux transformés.

Les containers contenant les copeaux ainsi préparés, sous atmosphère inerte, peuvent être stockés tels quels ou être stockés après mélange préalable avec les ingrédients habituels utilisés dans le stockage de ces poudres en vue de leur frittage.

C'est ainsi que l'on peut prévoir, en continu, un dispositif de mélange, non représenté, comportant une trémie tampon en acier recevant les copeaux transformés, recuits, équipé d'un vibrateur-extracteur, d'une trémie de stockage de stéarate de zinc en acier inoxydable équipée d'un vibrateur-extracteur réglable, une trémie de stockage de graphite en acier inoxydable équipée d'un extracteur réglable, le mélange s'effectuant dans une trémie peseuse et avec une bascule à jauge sous atmosphère d'azote. On obtient ainsi un mélange de poudre prête à être utilisée pour la fabrication de pièces frittées.

Comme indiqué plus haut, on peut prévoir différentes variantes dans le procédé, sans sortir du cadre de la présente invention, la caractéristique essentielle étant un traitement sous atmosphère inerte au moyen de dispositifs vibrants assurant un brassage continuel favorisant le contact avec l'atmosphère inerte, les produits traitants et permettant d'éviter l'agglomération des copeaux. On peut remarquer, en particulier, que le procédé suivant l'invention, fonctionne pratiquement comme un dispositif de raffinage ce qui, compte tenu de la nature des matières premières traitées, est surprenant.

**Revendications**

1. Procédé de traitement de déchets métalliques et en particulier de copeaux, consistant à mettre en oeuvre un nettoyage chimique par dégraissage, un broyage sous atmosphère inerte de copeaux, rendus fragiles, si nécessaire, par utilisation de température très basse et un traitement thermique, caractérisé par le fait que l'on effectue un criblage après le nettoyage chimique, que le passage dans les différents traitements s'effectue au moyen de dispositifs vibrants dans une installation étanche aux éléments atmosphèriques et que les particules résultant du broyage sont soumises avant frittage à un traitement thermique à une température de 500 à 800°C, sous atmosphère réductrice.

2. Procédé selon la revendication 1, caractérisé par le fait que les dispositifs vibrants sont constitués par des distributeurs vibrants amenant les copeaux dans le bain de dégraissage et dans les cribles, par des élévateurs vibrants permettant l'extraction et le séchage progressif des copeaux justqu'à l'étape de criblage qui est effectuée dans un crible vibrant.

3. Procédé selon la revendication 1, caractérisé par le fait que le dégraissage est effectué par action d'un agent décapant combiné à un traitement par ultrasons émis dans le bain de dégraissage.

4. Procédé selon l'une quelconque des revendications 1 à 3, caractérisé par le fait que l'atmosphère inerte au cours de l'étape de broyage est fournie de manière connue en soi, par un bain d'azote liquide ayant pour fonction de fragiliser les copeaux avant leur broyage et de fournir également par dégagement ladite atmosphère inerte.

5. Procédé selon l'une quelconque des revendications 1 à 4, caractérisé par le fait que le traitement thermique s'effectue dans un dispositif vibrant hélicoïdal en un matériau réfractaire entouré d'un four assurant trois zones de chauffage à une température comprise entre environ 500 et 800°C.

6. Procédé selon l'une quelconque des revendications 1 à 5, caractérisé par le fait que l'atmosphère réductrice est créée par un mélange d'azote et d'hydrogène qui circule à contre-courant des copeaux dans le dispositif vibrant.

7. Procédé selon l'une quelconque des revendications 1 à 6, caractérisé par le fait qu'il faut que l'on effectue après le criblage au moins un deferrage magnétique et/ou un traitement au démagnétiseur.

8. Installation de traitement de déchets métalliques et, en particulier, de copeaux, pour la mise en oeuvre du procédé selon l'une quelconque des revendications 1 à 7, caractérisée par le fait qu'elle comprend au moins un dispositif de nettoyage physique et chimique, un dispositif de broyage sous atmosphère inerte, un dispositif de traitement thermique sous atmosphère réductrice, ces différents dispositifs étant reliés par et comportant des éléments de vibrations permettant de faire circuler lesdits déchets metalliques de la phase de nettoyage à la phase de traitement thermique.

9. Installation selon la revendication 8, caractérisée par le fait que le dispositif de nettoyage physique et chimique est constitué par une tour de lavage comportant un élévateur vibrant permettant d'extraire les copeaux dégraissés de l'agent de dégraissage associé à des couloirs vibrants amenant les copeaux dans le bain de dégraissage et évacuant les copeaux vers les dispositifs de séparation mécanique constitués par une trémie vibrante, éventuellement un dispositif de déferrage magnétique, un démagnétiseur et un séparateur par soufflage d'air suivi d'une seconde tour de lavage.

10. Installation selon la revendication 8 ou 9, caractérisée par le fait que le dispositif de broyage comporte au moins un broyeur relié à un couloir vibrant permettant d'alimenter ce dernier et à un couloir vibrant permettant de reprendre les produits broyés pour les soumettre au traitement thermique sous atmosphère réductrice ou à un nouveau broyage.

11. Installation selon l'une quelconque des revendications 8 à 10, caractérisée par le fait que le dispositif de traitement thermique est constitué par un dispositif hélicoïdal comportant deux vibrateurs, entouré d'un four assurant trois zones de chauffage, relié à un couloir vibrant permettant d'évacuer les copeaux traités.

12. Installation selon la revendication 11, caractérisée par le fait que ledit dispositif de traitement thermique est équipé d'une source d'un gaz inerte et d'un gaz réducteur circulant à contre-courant de l'avancement des copeaux dans le dispositif hélicoïdal.

## Claims

1. A process for treating metallic wastes, particularly cuttings, consisting of applying a chemical cleaning operation by degreasing, a cuttings milling operation in an inert atmosphere, the cuttings being embrittled, if necessary, by the use of a very low temperature and a heat treatment, characterized by the fact that screening is carried out after the chemical cleaning, that flow through the various treatment processes is achieved by means of vibration devices in a plant that is sealed to atmospheric elements and that the particles resulting from the milling operation are subjected, before sintering, to a heat treatment at a temperature of 500 to 800°C in a reducing atmosphere.

2. The process according to claim 1, characterized by the fact that the vibrating devices are made up of vibrating feeders bringing the cuttings to the degreasing bath and to the screens, by vibrating elevators permitting the extraction and gradual drying of the cuttings leading to the screening stage which is performed on a vibratory screen.

3. The process according to claim 1, characterized by the fact that the degreasing is carried out by the action of a cleaing agent combined with a treatment by ultrasound transmitted into the degreasing bath.

4. The process according to any of claims 1 to 3, characterized by the fact that the inert atmosphere during the milling stage is supplied in a manner known per se by a bath of liquid nitrogen which has the role of embrittling the cuttings before they are milled and of also supplying the said inert atmosphere by the gas given off.

5. The process according to any of claims 1 to 4, characterized by the fact that the heat treatment is performed in a helical vibratory device made of refractory material surrounded by a furnace providing three heating zones at a temperature lying between 500 and 800°C approximately.

6. The process according to any of claims 1 to 5, characterized by the fact that the reducing atmosphere is created by a mixture of nitrogen and hydrogen which circulates countercurrent to the cuttings in the vibratory device.

7. The process according to any of claims 1 to 6, characterized by the fact that it is necessary after the screening has been performed to carry out at least one magnetic particle removal operation and/or a demagnetizer treatment.

8. An installation for processing metallic wastes, particularly cuttings, for application of the process according to any of claims 1 to 7, characterized by the fact that it comprises at least one physical and chemical cleaning device, one device for milling in an inert atmosphere, one device for heat treatment in a reducing atmosphere, these various devices or systems being connected by and containing vibratory elements enabling the said metallic wastes or scrap to be circulated from the cleaning phase to the heat treatment phase.

9. The installation according to claim 8, characterized by the fact that the physical and chemical cleaning device consists of a washing tower containing a vibrating elevator enabling the degreased cuttings to be extracted from the degreasing agent combined with vibrating channels or ducts bringing the cuttings to the degreasing bath and removing the cuttings to the mechanical separation systems formed by a vibratory hopper, possibly a magnetic particle separation device, a demagnetizer and an air blast separator followed by a second wash tower.

10. The installation according to claim 8 or 9, characterized by the fact that the milling device includes at least one grinding mill connected to a vibrating duct feeding this mill and a vibrating duct enabling the milled products to be collected in order to be subjected to the heat treatment in a reducing atmosphere or to a new milling operation.

11. The installation according to any of claims 8 to 10, characterized by the fact that the heat treatment device is made up of a helical device comprising two vibrators, surrounded by a furnace providing three heating zones connected to a vibrating duct enabling the heat treated cuttings to be removed.

12. The installation according to claim 11, characterized by the fact that the said heat treatment device is fitted with a source of an inert gas and of a reducing gas flowing countercurrent to the direction of feed of the cuttings in the helical device.

## Patentansprüche

1. Verfahren zur Behandlung metallischer Abfälle und insbesondere von Spänen, bestehend aus der Anwendung einer chemischen Reinigung mittels Entfettung, Zermahlen von Spänen unter Inertgasatmosphäre, die erforderlichenfalls durch Anwendung einer sehr niedrigen Temperatur und einer Wärmebehandlung versprödet wurden, dadurch gekennzeichnet, dass man nach der chemischen Reinigung eine Siebung einschaltet, dass der Durchgang durch die verschiedenen Behandlungsstufen mittels Rüttelvorrichtungen in einer gegen atmosphärische Einwirkung abgedichteten Einrichtung erfolgt und dass die aus dem Malhgang hervorgehenden Teilchen vor dem Sintern einer Wärmebehandlung bei 500 bis 800°C in reduzierender Atmosphäre unterzogen werden.

2. Verfahren gemäss Anspruch 1, dadurch gekennzeichnet, dass die Rüttelvorrichtungen aus Rüttelförderern, die die Späne in das Entfettungsbad und in die Siebe befördern, und aus Rüttel-Hubförderern bestehen, die die Förderung und die fortschreitende Trocknung der Späne bis zum Sieben ermöglichen, das in einem Rüttelsieb erfolgt.

3. Verfahren gemäss Anspruch 1, dadurch gekennzeichnet, dass das Entfetten durch Einwirkung eines Beizmittels kombiniert mit einer Ultraschallbehandlung im Entfettungsbad erfolgt.

4. Verfahren gemäss einem beliebigen der obigen Ansprüche 1 bis 3, dadurch gekennzeichnet, dass die inerte Atmosphäre in der Mahlstufe auf eine an sich bekannte Weise durch ein Bad mit flüssigem Stickstoff erzeugt wird, dessen Aufgabe es ist, die Späne vor dem Mahlen zu verspöden und gleichzeitig die genannte inerte Atmosphäre freizusetzen.

5. Verfahren gemäss einem beliebigen der obigen Ansprüche 1 bis 4, dadurch gekennzeichnet, dass die Wärmebehandlung in einem schraubenförmigen Rüttelförderer aus feuerfestem Material ausgeführt wird, das von einem Ofen umgeben ist, der drei Heizzonen mit einer Temperatur zwischen etwa 500 und 800°C gewährleistet.

6. Verfahren gemäss einem beliebigen der obigen Ansprüche 1 bis 5, dadurch gekennzeichnet, dass die reduzierende Atmosphäre durch ein Gemisch aus Stickstoff und Wasserstoff erzeugt wird, das im Gegenstrom zu den Spänen durch die Rüttelvorrichtung strömt.

7. Verfahren nach einem beliebigen der obigen Ansprüche 1 bis 6, dadurch gekennzeichnet, dass man nach dem Sieben wenigstens einmal auf magnetischem Wege das Eisen entfernt und/oder eine Entmagnetisierungsbehandlung einschaltet.

8. Einrichtung zur Behandlung metallischer Abfälle und insbesondere von Spänen zwecks Verwirklichung eines Verfahrens gemäss einem beliebigen der obigen Ansprüche 1 bis 7, dadurch gekennzeichnet, dass sie wenigstens eine physikalische und chemische Reinigungsvorrichtung, eine Mahlvorrichtung in inerter Atmosphäre, eine Vorrichtung zur Wärmebehandlung in reduzierender Atmosphäre enthält, wobei diese verschiedenen Vorrichtungen durch Rüttelelemente verbunden sind und Rüttelelemente enthalten, die es ermöglichen, die genannten metallischen Abfälle aus der Reinigungsphase in die Wärmebehandlungsphase zur fördern.

9. Einrichtung gemäss Anspruch 8, dadurch gekennzeichnet, dass die physikalische und chemische Reinigungsvorrichtung einen Waschturm, in dem ein Rüttel-Hubförderer das Abziehen der entfetteten Späne aus dem Entfettungsmittel ermöglicht, in Verbindung mit Rüttelrutschen, die die Späne in das Entfettungsbad bringen bzw. die Späne zu den mechanischen Trennvorrichtungen führen, die aus einem Rüttelsieb, einer Vorrichtung zum magnetischen Entfernen des Eisens, einer Entmagnetisierungsspule und einer gebläsebetriebenen Scheideanlage besteht, und anschliessend einem zweiten Waschturm enthält.

10. Einrichtung gemäss Ansprüchen 8 oder 9, dadurch gekennzeichnet, dass die Mahlvorrichtung wenigstens einen Zerkleinerer verbunden mit einer Rüttelrutsche enthält, die es ermöglicht, diesen letzteren zu beschicken, und mit einer Rüttelrutsche, die es ermöglicht, die gemahlenen Produkte wieder aufzunehmen, um sie einer Wärmebehandlung in reduzierender Atmosphäre zu unterwerfen oder sie einem weiteren Mahlgang zuzuführen.

11. Einrichtung gemäss einem beliebigen der Ansprüche 8 bis 10, dadurch gekennzeichnet, dass die Vorrichtung zur Wärmebehandlung aus einer schraubenförmigen Vorrichtung besteht, die zwei Rüttelförderer enthält und von einem Ofen umgeben ist, der drei Heizzonen gewährleistet und mit einer Rüttelrutsche in Verbindung steht, die die Abfuhr der behandelten Späne ermöglicht.

12. Einrichtung gemäss Anspruch 11, dadurch gekennzeichnet, dass die genannte Vorrichtung zur Wärmebehandlung mit einer Quelle für inertes Gas und für ein reduzierendes Gas ausgerüstet ist, das im Gegenstrom zur Vorwärtsbewegung der Späne durch die schraubenförmige Vorrichtung strömt.

0 002 664